# EUROPEAN PATENT APPLICATION

(11) **EP 1 182 026 A1**
(43) Date of publication of application: **27.02.2002**
(21) Application number: 99973770.3
(22) Date of filing: 09.03.1999
(51) Int. Cl.: B29C 45/26

(54) **HOT RUNNER UNIT AND HOT RUNNER METAL MOLD**

(71) Applicant: Shinko Sellbic Co., Ltd., Tokyo 143-0022 (JP)
(72) Inventor: TAKEUCHI, Hiroshi, Tokyo 143-0022 (JP)
(74) Representative: Kern, Ralf M., Dipl.-Ing. Ralf M. Kern & Partner
(86) International application number: JP9901123
(87) International publication number: WO0053388

(57) **Abstract**

A hot runner unit capable of easily attaching and detaching a hot runner portion in various types of hot runner molds, wherein at least a heater and a hot runner nozzle are assembled integrally through a holding block, whereby the hot runner portion can be attached and detached as a unit from the hot runner mold and, so that the hot runner portion can be assembled easily to the hot runner mold and provide flexibility to various types of the hot runner molds so as to enable mass-production at low cost.

## Description

### [Technical Field]

This invention relates to a hot runner mold and a hot runner unit forming a part of the hot runner mold, which are used for runnerless injection molding.

More particularly, this invention relates to an improvement of interchangeability of a hot runner portion in a hot runner mold.

### [Background Art]

In general, a hot runner mold is retained by supporting its hot runner part within a space defined between a retainer plate and a bottom plate through a spacer block or the like.

Since such a hot runner mold has a non-contacting type assembly in which a void is formed between the hot runner part and retainer plate, heat generated by a heater in the hot runner part prevents molding failure, However, the work of assembling the heater, hot runner nozzle, manifold block and other parts, which constitute the hot runner part, into the void turns out to be a troublesome chore. Of the component parts of the hot runner mold, the hot runner part is relatively expensive. Thus, it tends to keep down the cost of the hot runner mold by adapting a common hot runner part to various types of hot runner molds.

Japanese Patent Publication HEI 5-14828 discloses a cassette type mold.

The known the cassette type mold comprises a cassette block with a sliding mechanism for detachably attaching a peripheral part around a cavity to the retainer plate. An ejector pin and an ejector plate are also integrally mounted in part detachably on the cassette block. Accordingly, the cassette type mold facilitates troublesome replacement of the cavity, thus making it possible to produce various sorts of moldings bit by bit. Besides, since the ejector pin and ejector plate are integrally mounted in part on the cassette block, these components in their assembled state can be demounted with ease.

The detachable structure in such a cassette type mold is desired to be applicable to the hot runner mold.

There has been a need for a hot runner mold capable of solving the problem of forming a protruding remnant left at a gate portion of a molded product.

Furthermore, there is anticipated development of a technique of forming manifold passages having good resin-flowing properties in a manifold block constituting the hot runner structure in the hot runner mold at low cost.

### [Description of the Invention]

The present invention was made in the light of the foregoing problems. The first object of the invention is to provide a hot runner unit capable of easily attaching and detaching a hot runner portion in various hot runner molds.

The second object of the invention is to provide a hot runner unit applicable to a cassette type mold as noted above.

The third object of the invention is to provide a hot runner mold, which prevents a protruding remnant from being left at a gate portion of the molded product

The fourth object of the invention is to provide a hot runner mold capable of forming manifold passages having good resin-flowing properties at low cost.

To attain the first object described above according to the present invention, there is provided a hot runner unit integrally united with at least a heater and a hot runner nozzle through a retaining block as set forth in claim 1.

As set forth in claim 1, a solution for attaining the first object described above is to provide a hot runner unit characterized in that a hot runner portion is attachable to and detachable from the hot runner unit. Thus, the hot runner portion in the hot runner unit can be assembled with ease. Besides, since the hot runner portion has general applicability relative to various sorts of hot runner molds, the hot runner unit according to the invention can be mass-produced at low cost

As set forth in claim 2, another solution for attaining the first object described above is to form the retaining block from heat insulating material in the hot runner unit in the hot runner unit of claim 1.

This solution provides the retaining block with heat insulating properties.

As set forth in claim 3, still another solution for attaining the first object described above is to form a void within the retaining block of the hot runner unit in the hot runner unit of claim 1 or claim 2.

The heat insulating properties of the void defined by this solution provides the interior of the retaining block with thermal expansive allowance.

As set forth in claim 4, yet another solution for attaining the first object described above is to provide a hot runner unit characterized in that at least a heater and a hot runner nozzle are integrally assembled through a retaining block, and the length of the hot runner nozzle is determined so as to allow the front end portion of the hot runner nozzle to slightly protrude into a cavity through the gate of the mold.

The front end portion of the hot runner nozzle defined by this solution prevents the protruding remnant from being formed at the gate portion of the molded product.

As set forth in claim 5, the other solution for attaining the first object described above is to form the retaining block of the heat insulating material in the hot runner unit set forth in claim 4.

As set forth in claim 6, the other solution for attaining the first object described above is to form a void in the retaining block in the hot runner unit set forth in claim 4 or claim 5.

As set forth in claim 7, the other solution for attaining the first object described above is to provide the hot runner unit characterized in that at least the heater, hot runner nozzle and manifold block are integrally assembled through the retaining block.

This solution provides the manifold block with a plurality of hot runner nozzles in the hot runner portion.

As set forth in claim 8, the other solution for attaining the first object described above is to provide form the retaining block of the heat insulating material in the hot runner unit set forth in claim 7.

As set forth in claim 9, the other solution for attaining the first object described above is to form a void in the retaining block of the hot runner unit set forth in claim 7 or claim 8.

As set forth in claim 10, the other solution for attaining the first object described above is to provide the hot runner unit characterized in that at least the heater, hot runner nozzle and manifold block are integrally assembled through the retaining block, and the manifold block is formed of a split structure of a plurality of manifold block segmentation pieces having divided surfaces constituting the manifold passages.

This solution provides the manifold passages formed by the divided surfaces of the manifold block segmentation pieces. Thus, the manifold passages can easily be formed, consequently to reduce the cost of processing the manifold block.

As set forth in claim 11, the other solution for attaining the first object described above is to provide form the retaining block of the heat insulating material in the hot runner unit set forth in claim 10.

As set forth in claim 12, the other solution for attaining the first object described above is to form a void in the retaining block in the hot runner unit set forth in claim 10 or claim 11.

As set forth in claim 13, the other solution for attaining the first object described above is to provide the hot runner unit characterized in that at least the heater, hot runner nozzle and manifold block are integrally assembled through the retaining block, the manifold block is formed of a split structure of a plurality of manifold block segmentation pieces having divided surfaces constituting the manifold passages, and each manifold block segmentation piece is resticted by a positioning block and sintered.

This solution provides the sintered manifold block segmentation pieces restricted by the positioning block and precisely assembled.

As set forth in claim 14, the other solution for attaining the first object described above is to provide form the retaining block of the heat insulating material in the hot runner unit set forth in claim 13.

As set forth in claim 15, the other solution for attaining the first object described above is to form a void in the retaining block in the hot runner unit set forth in claim 13 or claim 14.

As set forth in claim 16, the other solution for attaining the first object described above is to provide a hot runner unit characterized in that at least the heater, hot runner nozzle and manifold block are integrally assembled through the retaining block, and the length of the hot runner nozzle is determined so as to allow the front end portion of the hot runner nozzle to slightly protrude into a cavity through the gate of the mold.

As set forth in claim 17, the other solution for attaining the first object described above is to provide form the retaining block of the heat insulating material in the hot runner unit set forth in claim 16.

As set forth in claim 18, the other solution for attaining the first object described above is to form a void in the retaining block in the hot runner unit set forth in claim 16 or claim 17.

As set forth in claim 19, the other solution for attaining the first object described above is to a hot runner unit characterized in that at least a heater, a hot runner nozzle and a manifold block are integrally assembled through a retaining block, the manifold block of a split structure is composed of a plurality of manifold block segmentation pieces having divided surfaces constituting the manifold passages, and the length of the hot runner nozzle is determined so as to allow the front end portion of the hot runner nozzle to slightly protrude into a cavity through the gate of the mold.

As set forth in claim 20, the other solution for attaining the first object described above is to provide form the retaining block of the heat insulating material in the hot runner unit set forth in claim 19.

As set forth in claim 21, the other solution for attaining the first object described above is to form a void in the retaining block in the hot runner unit set forth in claim 19 or claim 20.

As set forth in claim 22, the other solution for attaining the first object described above is to a hot runner unit characterized in that at least a heater, a hot runner nozzle and a manifold block are integrally assembled through a retaining block, the manifold block of a split structure is composed of a plurality of manifold block segmentation pieces having divided surfaces constituting the manifold passages, each manifold block segmentation piece is restricted by a positioning block and sintered, and the length of the hot runner nozzle is determined so as to allow the front end portion of the hot runner nozzle to slightly protrude into a cavity through the gate of the mold.

As set forth in claim 23, the other solution for attaining the first object described above is to provide form the retaining block of the heat insulating material in the hot runner unit set forth in claim 22.

As set forth in claim 24, the other solution for attaining the first object described above is to form a void in the retaining block in the hot runner unit set forth in claim 22 or claim 23.

As set forth in claim 25, a solution for attaining the second object described above is to provide a hot runner mold comprising a hot runner unit formed by integrally assembling peripheral components around a cavity with at least a heater and a hot runner nozzle through a retaining block, wherein the hot runner unit is attachable to and detachable from a retainer plate.

According to this solution, the peripheral components around the cavity and the hot runner unit are attachable to and detachable from the retainer plate. Thus, the cassette type mold is applicable to the hot runner mold.

As set forth in claim 26, another solution for attaining the second object described above is to form the retaining block from heat insulating material in the hot runner unit in the hot runner unit of claim 25.

As set forth in claim 27, still another solution for attaining the second object described above is to form a void within the retaining block of the hot runner unit in the hot runner unit of claim 25 or claim 26.

As set forth in claim 28, yet another solution for attaining the second object described above is to provide a hot runner mold comprising a hot runner unit formed by integrally assembling peripheral components around a cavity with at least a heater and a hot runner nozzle through a retaining block, and the length of the hot runner nozzle is determined so as to allow the front end portion of the hot runner nozzle to slightly protrude into the cavity through the gate of the mold, wherein the hot runner unit is attachable to and detachable from a retainer plate.

As set forth in claim 29, further solution for attaining the second object described above is to form the retaining block from heat insulating material in the hot runner unit in the hot runner unit of claim 28.

As set forth in claim 30, the other solution for attaining the second object described above is to form a void within the retaining block of the hot runner unit in the hot runner unit of claim 28 or claim 29.

As set forth in claim 31, the other solution for attaining the second object described above is to provide a hot runner mold comprising a hot runner unit formed by integrally assembling peripheral components around a cavity with at least a heater, a hot runner nozzle and a manifold block through a retaining block, wherein the manifold block and the hot runner unit are attachable to and detachable from a retainer plate.

As set forth in claim 32, the other solution for attaining the second object described above is to form the retaining block from heat insulating material in the hot runner unit in the hot runner unit of claim 31.

As set forth in claim 33, the other solution for attaining the second object described above is to form a void within the retaining block of the hot runner unit in the hot runner unit of claim 31 or claim 32.

As set forth in claim 34, the other solution for attaining the second object described above is to provide a hot runner mold comprising a hot runner unit formed by integrally assembling peripheral components around a cavity with at least a heater, a hot runner nozzle and a manifold block through a retaining block, and the manifold block is formed of a split structure of a plurality of manifold block segmentation pieces having divided surfaces constituting the manifold passages, wherein the manifold passages and the hot runner unit are attachable to and detachable from a retainer plate.

As set forth in claim 35, the other solution for attaining the second object described above is to form the retaining block from heat insulating material in the hot runner unit in the hot runner unit of claim 34.

As set forth in claim 36, the other another solution for attaining the second object described above is to form a void within the retaining block of the hot runner unit in the hot runner unit of claim 34 or claim 35.

As set forth in claim 37, the other solution for attaining the second object described above is to provide a hot runner mold comprising a hot runner unit formed by integrally assembling peripheral components around a cavity with at least a heater, a hot runner nozzle and a manifold block through a retaining block, the manifold block is formed of a split structure of a plurality of manifold block segmentation pieces having divided surfaces constituting the manifold passages, and each manifold block segmentation piece is restricted by a positioning block and sintered, wherein the manifold passages and the hot runner unit are attachable to and detachable from a retainer plate.

As set forth in claim 38, the other solution for attaining the second object described above is to form the retaining block from heat insulating material in the hot runner unit in the hot runner unit of claim 37.

As set forth in claim 39, the other another solution for attaining the second object described above is to form a void within the retaining block of the hot runner unit in the hot runner unit of claim 37 or claim 38.

As set forth in claim 40, the other solution for attaining the second object described above is to provide a hot runner mold comprising a hot runner unit formed by integrally assembling peripheral components around a cavity with at least a heater, a hot runner nozzle and a manifold block through a retaining block, and the length of the hot runner nozzle is determined so as to allow the front end portion of the hot runner nozzle to slightly protrude into the cavity through the gate of the mold, wherein the hot runner unit is attachable to and detachable from a retainer plate.

As set forth in claim 41, the other solution for attaining the second object described above is to form the retaining block from heat insulating material in the hot runner unit in the hot runner unit of claim 40.

As set forth in claim 42, the other another solution for attaining the second object described above is to form a void within the retaining block of the hot runner unit in the hot runner unit of claim 40 or claim 41.

As set forth in claim 43, the other solution for attaining the second object described above is to provide a hot runner mold comprising a hot runner unit formed by integrally assembling peripheral components around a cavity with at least a heater, a hot runner nozzle and a manifold block through a retaining block, the manifold block is formed of a split structure of a plurality of manifold block segmentation pieces having divided surfaces constituting the manifold passages, and the length of the hot runner nozzle is determined so as to allow the front end portion of the hot runner nozzle to slightly protrude into the cavity through the gate of the mold, wherein the hot runner unit is attachable to and detachable from a retainer plate.

As set forth in claim 44, the other solution for attaining the second object described above is to form the retaining block from heat insulating material in the hot runner unit in the hot runner unit of claim 43.

As set forth in claim 45, the other another solution for attaining the second object described above is to form a void within the retaining block of the hot runner unit in the hot runner unit of claim 43 or claim 44.

As set forth in claim 46, the other solution for attaining the second object described above is to provide a hot runner mold comprising a hot runner unit formed by integrally assembling peripheral components around a cavity with at least a heater, a hot runner nozzle and a manifold block through a retaining block, the manifold block is formed of a split structure of a plurality of manifold block segmentation pieces having divided surfaces constituting the manifold passages, each manifold block segmentation piece is restricted by a positioning block and sintered, and the length of the hot runner nozzle is determined so as to allow the front end portion of the hot runner nozzle to slightly protrude into the cavity through the gate of the mold, wherein the hot runner unit is attachable to and detachable from a retainer plate.

As set forth in claim 47, the other solution for attaining the second object described above is to form the retaining block from heat insulating material in the hot runner unit in the hot runner unit of claim 46.

As set forth in claim 48, the other another solution for attaining the second object described above is to form a void within the retaining block of the hot runner unit in the hot runner unit of claim 46 or claim 47.

As set forth in claim 49, a solution for attaining the third object described above is to provide a hot runner unit characterized in that the length of a hot runner nozzle is determined so as to allow the front end portion of the hot runner nozzle to slightly protrude into the cavity through a gate of the mold.

This solution enables the front end portion of the hot runner nozzle to prevent the protruding remnant from being formed at the gate portion of the molded product.

As set forth in claim 50, another solution for attaining the third object described above is to provide a hot runner unit in which the manifold block is formed of a split structure of a plurality of manifold block segmentation pieces having divided surfaces constituting the manifold passages.

As set forth in claim 51, still another solution for attaining the third object described above is to provide a hot runner mold comprising manifold block segmentation pieces each restricted by a positioning block and sintered in the hot runner unit of claim 50.

As set forth in claim 52, a solution for attaining the forth object described above is to provide a hot runner unit characterized in that a manifold block is formed of a split structure of a plurality of manifold block segmentation pieces having divided surfaces constituting the manifold passages.

According to this solution, the manifold passages having good resin-flowing properties in a manifold block constituting the hot runner structure in the hot runner unit can be mass-produced at low cost.

As set forth in claim 53, another solution for attaining the third object described above is to provide a hot runner mold having manifold block segmentation pieces each restricted by a positioning block and sintered in the hot runner unit of claim 52.

### [Brief Description of the Drawings]

FIG. 1 is a sectional view showing the first embodiment of a hot runner unit according to the present invention.
FIG. 2 shows a structure for assembling the hot runner unit according to the invention into a hot runner mold, wherein FIG. 2(A) is its plan view, and FIG. 2(B) is its side sectional view.
FIG. 3 is a perspective view showing the hot runner mold of this invention in an exploded state.
FIG. 4 is an enlarged sectional view of the principal portion of the hot runner mold of FIG. 3 in the assembled state.
FIG. 5 is a perspective view showing a gate remnant left on a product molded by the hot runner mold of FIG. 4.
FIG. 6 is a sectional view showing the second embodiment of the hot runner unit of the invention.
FIG. 7 is a perspective view of the principal portion of the hot runner mold of FIG. 6.
FIG. 8 is a perspective view showing the third embodiment of this invention in an exploded state.

### [Best Mode for carrying out the Invention]

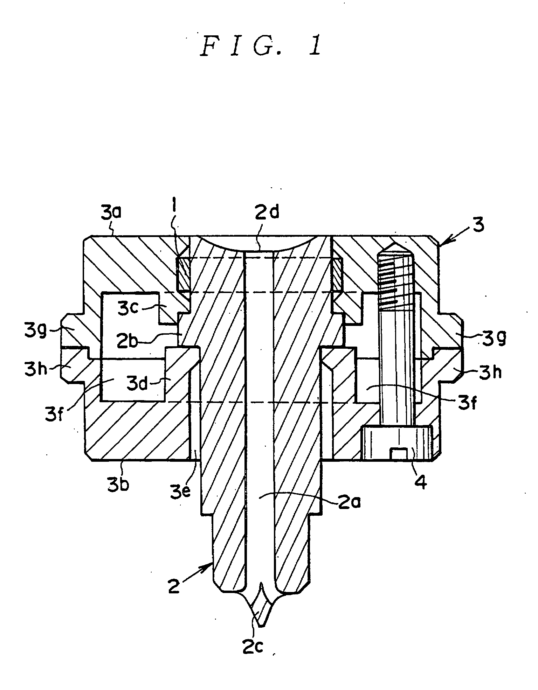

FIG. 1 shows the first embodiment of the best mode for realizing the hot runner unit according to the present invention.

In this embodiment, a hot runner nozzle 2 around which a heater 1 is wound is integrally assembled through a retaining block 3.

The heater 1 is formed in the shape of a belt and comprises a thermal sensing means such as a thermocouple for sensing the temperature of the heated hot runner nozzle 2.

The hot runner nozzle 2 has a resin passage 2a formed in its axial center, a flange 2b formed in the outer peripheral surface on the middle part thereof a small projection tip 2c for forming diversions of the resin passage 2a, and a curved contact face 2d formed on the rear end thereof, which comes in contact with a nozzle or the like of an injection molding machine.

The retaining block 3 comprises an upper half part 3a and a lower half part 3b and makes use of heat insulating material. As illustrated, the upper half part 3a and lower half part 3b each are shaped in a cup so as to accommodate the heater 1 and the hot runner nozzle 2 thereinside. The cup-shaped upper half part and lower half part are butt-joined to each other and squeezed using a screw 4, Around the centers of the insides of the upper half part 3a and lower half part 3b, there are respectively planted support cylinders 3c and 3d for supporting the hot runner nozzle 2 so as to securely hold the flange 2b of the hot runner nozzle 2 between the support cylinders 3c and 3d. The front end of the hot runner nozzle 2 held by the retaining block 3 protrudes from the lower half part 3b, and the rear end of the same is flush with and exposed from the upper half part 3a. There is formed a space 3e between the lower half part 3b and the hot runner nozzle 2 so as not to bring the lower haft part in contact with the hot runner nozzle 2, thus to prevent heat generated by the hot runner nozzle 2 to be conducted to the lower half part.

Inside the retaining block 3, a void 3f is defined between the cup-shaped upper half part 3a and lower half part 3b to ensure heat insulating properties and thermal expansive allowance. On the outer peripheral surfaces along the join line of the united upper and lower half parts 3a and 3b, there are formed flanges 3g and 3h for easily attaching the retaining block 3 to the hot runner mold.

According to this embodiment, the hot runner unit including the heater 1 and hot runner nozzle 2 becomes attachable to and detachable from the hot runner mold. This structure avoids the necessity of individually assembling the heater 1 and the hot runner nozzle 2 into the hot runner mold, consequently to facilitate assembling of the hot runner unit in the hot runner mold. Furthermore, since the hot runner unit has good versatility and interchangeability to easily applied to various hot runner molds, it can be mass-produced at low cost.

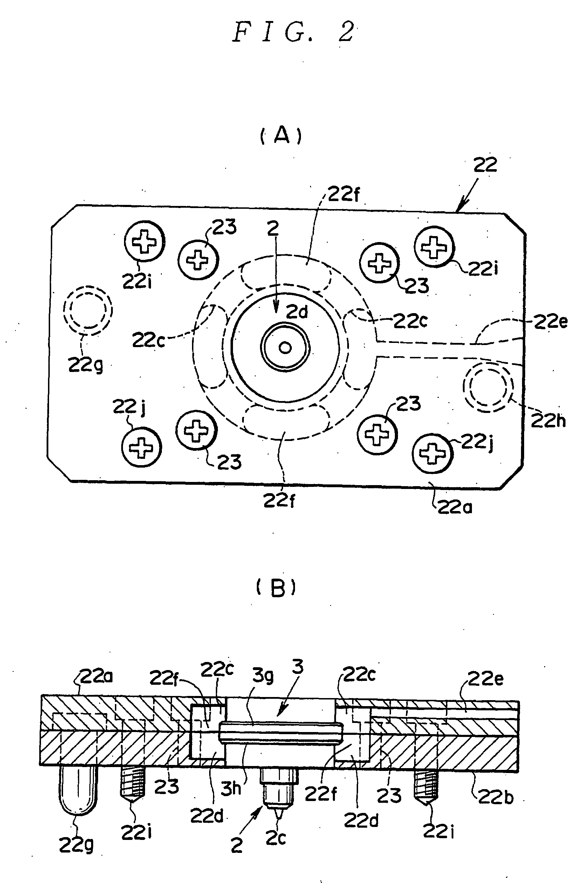

FIG. 2 through FIG. 5 show one example of the best mode for embodying the hot runner mold according to the present invention.

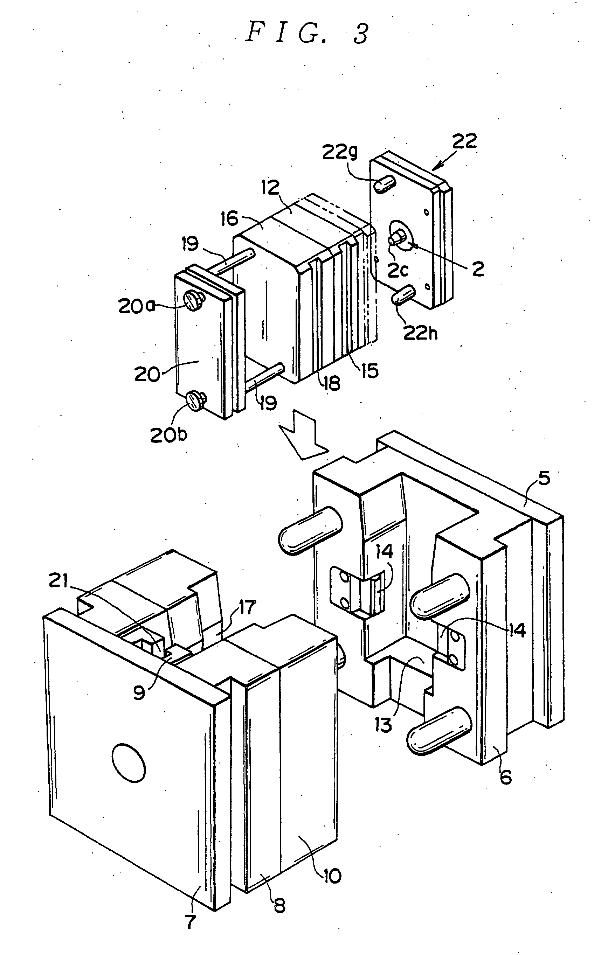

As shown in FIG. 3, the hot runner mold has a basic mold structure including a fixed retainer plate 6, a spacer block 8, an ejector plate 9, and a movable retainer plate 10, The fixed retainer plate 6 is mounted on a fixed die plate through a fixed bottom plate 5. The spacer block 8, ejector plate 9 and movable retainer plate 10 are mounted through a movable bottom plate 7 on a movable die plate connected to a tie bar on the not-shown fixed die plate.

The fixed retainer plate 6 has a mounting groove 13 formed in a substantially U shape, so that the fixed cassette block 12 formed by shaping the peripheral portion around a fixed cavity 11 into a plate block is mounted in a sliding manner. Inside the mounting groove 13, there are formed protrusions 14 for guiding the fixed cassette block 12 so as to allow the fixed cassette block 12 to slide therealong while being restrained. Thus, the fixed cassette block 12 has grooves 15 opposite to the protrusions 14.

The movable retainer plate 10 has a mounting groove 17 formed in a substantially U shape, so that the movable cassette block 16 formed by shaping the peripheral portion around a movable cavity (not shown) into a plate block is mounted in a sliding manner. Inside the mounting groove 17, there are formed protrusions (corresponding to the protrusions 14, but not shown) for guiding the movable cassette block 16 so as to allow the movable cassette block 16 to slide therealong while being restrained. Thus, the movable cassette block 16 has grooves 18 opposite to the protrusions inside the mounting groove 17.

To the ejector plate 9, there is attached an ejector cassette plate 20 shaped in a plate, which supports the rear ends of ejector pins 19 having the front end piercing the movable cassette block 16. The ejector plate has substantially U-shaped fitting grooves 21 receiving flanged pins 20a and 20b protruded from the rear surface of the ejector cassette plate 20 in a sliding manner.

The hot runner portion in this hot runner mold is composed by assembling the hot runner unit in a block member 22 being in contact with the fixed retainer plate 6 (mounting groove 13) and the fixed cassette block 12, as shown in FIG. 2.

The block member 22 is composed of two block plates 22a and 22b each formed of a plate-like heat insulating material, which are united by tightening up screws 23. On the central portion of the block plates 22a and 22b, there are mounted support pieces 22c and 22d for supporting flanges 3g and 3h of the retaining block 3 of the aforementioned hot runner unit in their radial state. Between the support pieces 22c and 22d, there is formed a void 22f leading to an exhaust port 22e.

Guide pins 22g and 22h entering into the fixed cassette block 12 are disposed one on either side of the block plates 22a and 22b. The guide pins 22g and 22h protrude from the block body 22 through the block plate 22b with which the fixed cassette block 12 comes in contact.

Inside the guide pins 22g and 22h of the block plates 22a and 22b, there are disposed mounting screws 22i and 22j to be screwed in the fixed cassette block 12. The mounting screws 22i and 22j protrude from the block body 22 through the block plate 22b with which the fixed cassette block 12 comes in contact.

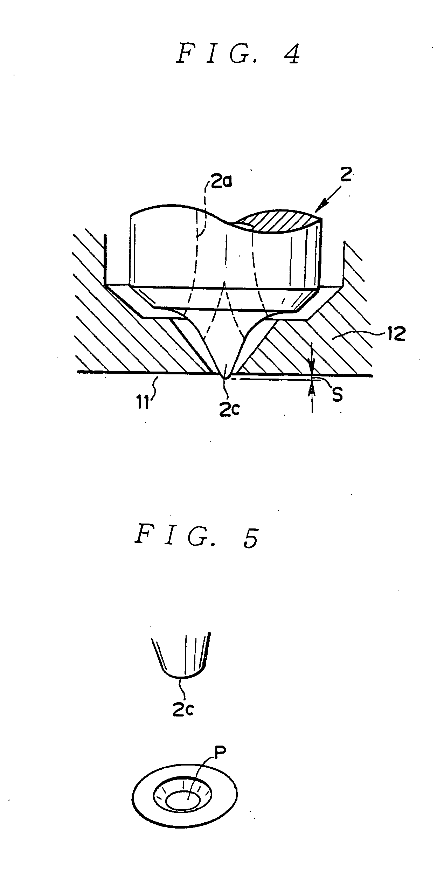

The front end of the hot runner nozzle 2 of the aforementioned hot runner unit protrudes from the block body 22 through the block plate 22b with which the fixed cassette block 12 comes in contact. The hot runner nozzle 2 has a tip 2c inserted from the gate of the fixed cassette block 12 into the fixed cavity 11 by a short length of S, as shown in FIG. 4.

According to this embodiment, since the block body 22 including the aforementioned hot runner unit composed of the hot runner portion and the fixed cassette block 12 can be attached to and detached from the mounting groove 13 of the fixed retainer plate 6 in the sliding manner, the cassette type hot runner can be applied to the hot runner mold.

Moreover, according to this embodiment, the suitable heat insulating properties and thermal expansive allowance for each component parts of the hot runner unit can be ensured by the block plates 22a and 22b formed of the heat insulating material of the block body 22 and the void 22f.

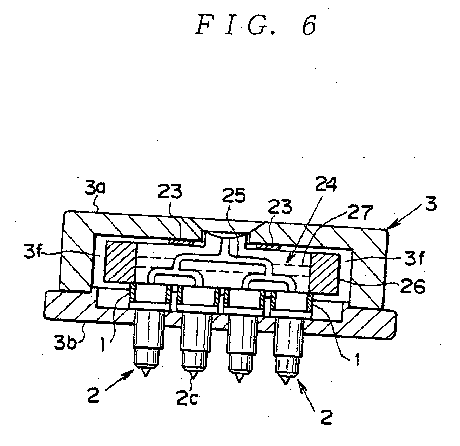

According to this embodiment, the gate portion D of the molded product produced finally is depressed due to the protruding tip 2c of the hot runner nozzle 2 as shown in FIG. 5, without forming a protruding gate remnant. Thus, the work of removing the gate remnant from the molded final product becomes unnecessary. The effect of making the gate portion D concave according to this embodiment can be expected in any other hot runner molds as well as the cassette type hot runner mold.

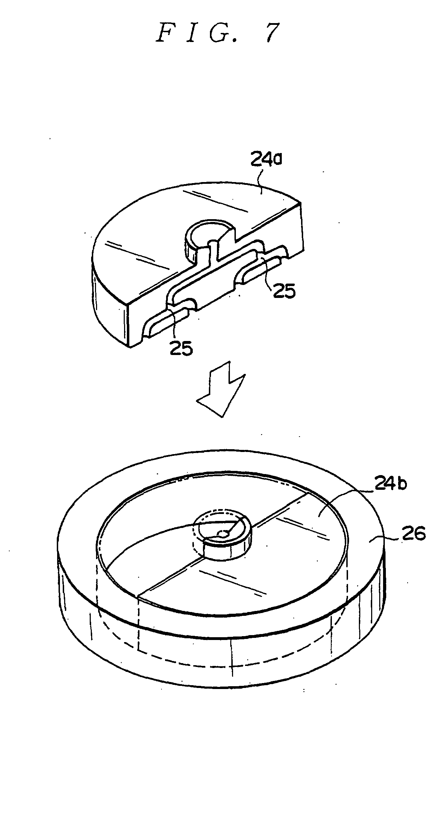

FIG. 6 and FIG. 7 show the second embodiment of the best mode for embodying the hot runner unit according to the present invention.

In this embodiment, a manifold block 24 is assembled inside the retaining block through a spacer 23. The manifold block 24 is connected to a plurality of hot runner nozzles 2.

The manifold block 24 is formed of a split structure of two manifold block segmentation pieces 24a and 24b. The manifold block segmentation pieces 24a and 24b each have manifold passages 25 formed in their divided surfaces. The manifold block segmentation pieces 24a and 24b each are united in their restricted state to a ring-shaped positioning block 26 by shrinkage fit and sintering as required. The manifold block 24 has a cartridge type heater 27 within.

This embodiment has the same function and effect as those of the aforementioned first embodiment.

In addition, according to this embodiment, since the work of forming the manifold passages 25 can be performed on the open side of the divided surfaces of the manifold block segmentation pieces 24a and 24b, the manifold passages having good resin-flowing properties can easily be formed at low cost. Beside, since the manifold block segmentation pieces 24a and 24b are united to and restricted by the ring-shaped positioning block 26 by shrinkage fit and sintering as required, possible dislocation at the joint of the manifold block segmentation pieces 24a and 24b can be prevented, consequently to achieve high precision in the assembly of the manifold block segmentation pieces 24a and 24b.

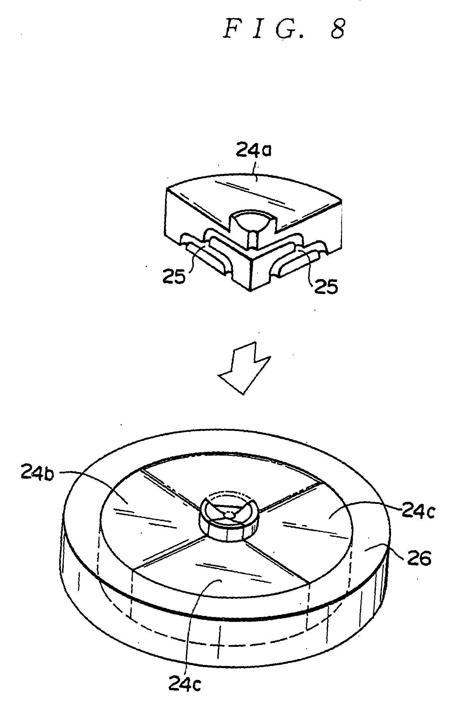

FIG. 8 shows the third embodiment of the best mode for embodying the hot runner unit according to the present invention.

In this embodiment, the manifold block 24 is formed of a split structure of four manifold block segmentation pieces 24a, 24b, 24c and 24d.

This embodiment also has the same function and effect as those of the aforementioned first embodiment.

The manifold block 24 may not be divided, though not shown. In this case, the manifold block may be united to and restricted by the positioning block26 by shrinkage fit.

### [Industrial Applicability]

The hot runner unit according to the present invention can be applied to various hot runner molds of all types including the cassette type hot runner mold.

## Claims

1. A hot runner unit integrally united with at least a heater and a hot runner nozzle through a retaining block

2. A hot runner unit as set forth in claim 1, wherein said retaining block is formed from heat insulating material.

3. A hot runner unit as set forth in claim 1 or claim 2, wherein a void is formed within said retaining block.

4. A hot runner unit **characterized in that** at least a heater and a hot runner nozzle are integrally assembled through a retaining block, and the length of said hot runner nozzle is determined so as to allow the front end portion of said hot runner nozzle to slightly protrude into a cavity through a gate of a mold.

5. A hot runner unit as set forth in claim 4, wherein said retaining block is formed from heat insulating material.

6. A hot runner unit as set forth in claim 4 or claim 5, wherein a void is formed within said retaining block.

7. A hot runner unit **characterized in that** at least a heater, a hot runner nozzle and a manifold block are integrally assembled through a retaining block

8. A hot runner unit as set forth in claim 7, wherein said retaining block is formed from heat insulating material.

9. A hot runner unit as set forth in claim 7 or claim 8, wherein a void is formed within said retaining block

10. A hot runner unit **characterized in that** at least a heater, a hot runner nozzle and a manifold block are integrally assembled through a retaining block, and said manifold block is formed of a split structure of a plurality of manifold block segmentation pieces having divided surfaces constituting manifold passages.

11. A hot runner unit as set forth in claim 9, wherein said retaining block is formed from heat insulating material.

12. A hot runner unit as set forth in claim 9 or claim 10, wherein a void is formed within said retaining block.

13. A hot runner unit **characterized in that** at least a heater, a hot runner nozzle and a manifold block are integrally assembled through a retaining block, and said manifold block is formed of a split structure of a plurality of manifold block segmentation pieces having divided surfaces constituting manifold passages, each of said manifold block segmentation pieces being restricted by a positioning block and sintered.

14. A hot runner unit as set forth in claim 13, wherein said retaining block is formed from heat insulating material.

15. A hot runner unit as set forth in claim 13 or claim 14, wherein a void is formed within said retaining block.

16. A hot runner unit **characterized in that** at least a heater, a hot runner nozzle and a manifold block are integrally assembled through a retaining block, and the length of said hot runner nozzle is determined so as to allow the front end portion of said hot runner nozzle to slightly protrude into a cavity through a gate of a mold.

17. A hot runner unit as set forth in claim 16, wherein said retaining block is formed from heat insulating material.

18. A hot runner unit as set forth in claim 16 or claim 17, wherein a void is formed within said retaining block

19. A hot runner unit **characterized in that** at least a heater, a hot runner nozzle and a manifold block are integrally assembled through a retaining block, said manifold block having a split structure composed of a plurality of manifold block segmentation pieces with divided surfaces constituting manifold passages, and the length of said hot runner nozzle is determined so as to allow the front end portion of said hot runner nozzle to slightly protrude into a cavity through a gate of a mold.

20. A hot runner unit as set forth in claim 19, wherein said retaining block is formed from heat insulating material.

21. A hot runner unit as set forth in claim 19 or claim 20, wherein a void is formed within said retaining block.

22. A hot runner unit **characterized in that** at least a heater, a hot runner nozzle and a manifold block are integrally assembled through a retaining block, said manifold block having a split structure composed of a plurality of manifold block segmentation pieces with divided surfaces constituting manifold passages, each of said manifold block segmentation pieces being restricted by a positioning block and sintered, and the length of said hot runner nozzle is determined so as to allow the front end portion of said hot runner nozzle to slightly protrude into a cavity through a gate of a mold.

23. A hot runner unit as set forth in claim 22, wherein said retaining block is formed from heat insulating material.

24. A hot runner unit as set forth in claim 22 or claim 23, wherein a void is formed within said retaining block.

25. A hot runner mold **characterized in that** a hot runner unit is formed by integrally assembling peripheral components around a cavity with at least a heater and a hot runner nozzle through a retaining block, wherein said hot runner unit is attachable to and detachable from a retainer plate.

26. A hot runner mold as set forth in claim 25, wherein said retaining block is formed from heat insulating material.

27. A hot runner mold as set forth in claim 25 or claim 26, wherein a void is formed within said retaining block.

28. A hot runner mold **characterized in that** a hot runner unit is formed by integrally assembling peripheral components around a cavity with at least a heater and a hot runner nozzle through a retaining block, and the length of said hot runner nozzle is determined so as to allow the front end portion of said hot runner nozzle to slightly protrude into a cavity through a gate of said mold, wherein said hot runner unit is attachable to and detachable from a retainer plate.

29. A hot runner mold as set forth in claim 28, wherein said retaining block is formed from heat insulating material.

30. A hot runner mold as set forth in claim 28 or claim 29, wherein a void is formed within said retaining block

31. A hot runner mold **characterized in that** a hot runner unit is formed by integrally assembling peripheral components around a cavity with at least a heater, a hot runner nozzle and a manifold block through a retaining block, wherein said hot runner unit is attachable to and detachable from a retainer plate.

32. A hot runner mold as set forth in claim 31, wherein said retaining block is formed from heat insulating material.

33. A hot runner mold as set forth in claim 31 or claim 32, wherein a void is formed within said retaining block.

34. A hot runner mold **characterized in that** a hot runner unit is formed by integrally assembling peripheral components around a cavity with at least a heater, a hot runner nozzle and a manifold block through a retaining block, said manifold block having a split structure composed of a plurality of manifold block segmentation pieces with divided surfaces constituting manifold passages.

35. A hot runner mold as set forth in claim 34, wherein said retaining block is formed from heat insulating material.

36. A hot runner mold as set forth in claim 34 or claim 35, wherein a void is formed within said retaining block

37. A hot runner mold **characterized in that** a hot runner unit is formed by integrally assembling peripheral components around a cavity with at least a heater, a hot runner nozzle and a manifold block through a retaining block, said manifold block being formed of a split structure of a plurality of manifold block segmentation pieces with divided surfaces constituting manifold passages, and each of said manifold block segmentation pieces is restricted by a positioning block and sintered, wherein said hot runner unit are attachable to and detachable from a retainer plate.

38. A hot runner mold as set forth in claim 37, wherein said retaining block is formed from heat insulating material.

39. A hot runner mold as set forth in claim 37 or claim 38, wherein a void is formed within said retaining block.

40. A hot runner mold **characterized in that** a hot runner unit is formed by integrally assembling peripheral components around a cavity with at least a heater, a hot runner nozzle and a manifold block through a retaining block, and the length of said hot runner nozzle is determined so as to allow the front end portion of said hot runner nozzle to slightly protrude into a cavity through a gate of said mold, wherein the hot runner unit is attachable to and detachable from a retainer plate.

41. A hot runner mold as set forth in claim 40, wherein said retaining block is formed from heat insulating material.

42. A hot runner mold as set forth in claim 40 or claim 41, wherein a void is formed within said retaining block.

43. A hot runner mold **characterized in that** a hot runner unit is formed by integrally assembling peripheral components around a cavity with at least a heater, a hot runner nozzle and a manifold block through a retaining block, said manifold block being formed of a split structure of a plurality of manifold block segmentation pieces with divided surfaces constituting manifold passages, and the length of said hot runner nozzle is determined so as to allow the front end portion of said hot runner nozzle to slightly protrude into a cavity through a gate of said mold, wherein said hot runner unit are attachable to and detachable from a retainer plate.

44. A hot runner mold as set forth in claim 43, wherein said retaining block is formed from heat insulating material.

45. A hot runner mold as set forth in claim 43 or claim 44, wherein a void is formed within said retaining block.

46. A hot runner mold **characterized in that** a hot runner unit is formed by integrally assembling peripheral components around a cavity with at least a heater, a hot runner nozzle and a manifold block through a retaining block, said manifold block being formed of a split structure of a plurality of manifold block segmentation pieces having divided surfaces constituting manifold passages, each of said manifold block segmentation pieces being restricted by a positioning block and sintered, and the length of said hot runner nozzle is determined so as to allow the front end portion of said hot runner nozzle to slightly protrude into a cavity through a gate of said mold, wherein said hot runner unit is attachable to and detachable from a retainer plate.

47. A hot runner mold as set forth in claim 46, wherein said retaining block is formed from heat insulating material.

48. A hot runner mold as set forth in claim 46 or claim 47, wherein a void is formed within said retaining block

49. A hot runner mold **characterized in that** the length of a hot runner nozzle is determined so as to allow the front end portion of said hot runner nozzle to slightly protrude into a cavity through a gate of said mold.

50. A hot runner mold as set forth in claim 49, further comprising a manifold block formed of a split structure of a plurality of manifold block segmentation pieces having divided surfaces constituting manifold passages.

51. A hot runner mold as set forth in claim 49 or claim 50, wherein said manifold block segmentation pieces are each restricted by a positioning block and sintered.

52. A hot runner mold **characterized in that** a manifold block is formed of a split structure of a plurality of manifold block segmentation pieces having divided surfaces constituting manifold passages.

53. A hot runner mold as set forth in claim 52, wherein said manifold block segmentation pieces each restricted by a positioning block and sintered.
